# FASCICULE DE BREVET EUROPEEN

(11) **EP 3 895 963 B1**
(45) Date de publication et mention de la délivrance du brevet: **28.01.2026**
(21) Numéro de dépôt: 21167991.5
(22) Date de dépôt: 13.04.2021
(51) Int. Cl.: B62D 25/00, B62D 29/00, B60R 13/07, B60R 13/08, B62D 25/08

(54) **INSERT GONFLANT POUR STRUCTURE DE CAISSE DE VÉHICULE**
AUFBLASBARER EINSATZ FÜR EINE FAHRZEUGKAROSSERIESTRUKTUR
INFLATING INSERT FOR VEHICLE BODY STRUCTURE

(30) Priorité: 14.04.2020 FR 2003711
(43) Date de publication de la demande: 20.10.2021
(73) Titulaire: Renault s.a.s, 92100 Boulogne Billancourt (FR)
(72) Inventeur: AGDID, Lahcen, 78370 PLAISIR (FR); ARPINO, Bruno, 78760 JOUARS PONTCHARTRAIN (FR)
(74) Mandataire: Renault Group

(56) Documents cités:
- EP-A1- 1 798 133
- FR-A1- 2 970 916
- FR-A1- 3 073 193
- FR-A1- 3 080 080
- US-A1- 2003 090 129
- US-A1- 2008 143 143

## Description

### Domaine Technique de l'invention

L'invention concerne un agencement arrière comprenant un d'une jonction entre un pavillon, un anneau arrière et un côté de caisse. L'invention porte encore sur une structure de caisse de véhicule comprenant un tel agencement. L'invention porte encore sur un véhicule comprenant une telle structure de caisse et/ou un tel agencement. L'invention porte encore sur un procédé de fabrication d'un tel véhicule ou d'une telle structure de caisse ou d'un tel agencement.

### Etat de la technique antérieure

Un véhicule, en particulier un véhicule automobile, notamment un véhicule automobile utilitaire, comprend généralement un anneau arrière au sein de la structure de caisse. Un tel anneau arrière entoure généralement l'ouverture du coffre, aussi bien lorsqu'elle est fermée par un hayon à axe horizontal que lorsqu'elle est fermée par une ou des portes battantes à axes verticaux. Généralement un renfort côté droit est agencé au niveau d'une jonction entre un tel anneau arrière, un pavillon ou toit et un côté de caisse droit. Généralement un renfort côté gauche est agencé au niveau d'une jonction entre un tel anneau arrière, un pavillon ou toit et un côté de caisse gauche.

Seulement un tel renfort doit permettre l'alimentation, par exemple en énergie électrique, pour un tel hayon ou au moins une telle porte battante, notamment pour le système de serrure. Ainsi un tel renfort est généralement percé pour permettre le passage de conducteurs tels que des fils électriques. Evidemment, un orifice ou perçage au sein d'un tel renfort limite son efficacité en termes de résistance aux torsions de la structure de caisse.

Ainsi, il conviendrait d'améliorer l'efficacité d'un tel renfort tout en permettant d'alimenter en énergie électrique la ou les portes de coffre.

### Présentation de l'invention

Le but de l'invention est de fournir un insert remédiant aux inconvénients ci-dessus. En particulier, l'invention permet de fournir un insert permettant à la fréquence propre en torsion de la structure de caisse de tendre vers 40 Hz.

### Résumé de l'invention

Pour atteindre cet objectif, l'invention porte sur un agencement arrière selon la revendication 1. et

L'insert peut comprendre un moyen de fixation pour la fixation sur une telle structure de caisse, notamment un moyen de fixation comprenant au moins une patte, notamment une patte métallique.

La cavité principale peut comprendre un contour comprenant au moins un rebord destiné à venir au contact de la deuxième partie.

La première partie peut comprendre au moins une nervure de rigidification.

L'invention porte encore sur une structure de caisse de véhicule, notamment de véhicule automobile, la structure de caisse comprenant un agencement tel que défini précédemment.

L'invention porte encore sur un véhicule, notamment un véhicule automobile, le véhicule comprenant un agencement tel que défini précédemment et/ou une structure de caisse telle que définie précédemment.

L'invention porte encore sur un procédé de fabrication d'un agencement ou d'une structure de caisse ou d'un véhicule comprenant les étapes suivantes :
- une étape de fixation d'un insert tel que défini précédemment, notamment une étape de fixation sur une gouttière latérale, notamment par soudage d'au moins une patte sur la gouttière latérale, de sorte à obtenir un pré-assemblage, puis
- une étape de fixation du pré-assemblage avec au moins une peau de côté de caisse de sorte à obtenir un assemblage de côté de caisse, notamment en emboîtant l'insert dans l'au moins une peau de côté de caisse, puis

- une étape de liaison de l'assemblage de côté de caisse sur un renfort arrière de custode, notamment par un appui de la deuxième partie contre la gouttière latérale, notamment par un appui contre la première face de la gouttière latérale et/ou par un appui de la deuxième partie contre le renfort arrière de custode, notamment par un appui contre la deuxième face du renfort arrière de custode par un chauffage déclenchant l'expansion ou gonflage de la deuxième partie, notamment en passant dans une étuve de peinture, de sorte à pré-contraindre le volume occupé par l'insert au niveau de la jonction, puis
- une étape de fixation d'un pavillon de sorte à fermer un corps creux s'étendant notamment entre la gouttière latérale, le côté de caisse et le renfort arrière de custode.

### Présentation des figures

Ces objets, caractéristiques et avantages de la présente invention seront exposés en détail dans la description suivante d'un mode de réalisation faite à titre non-limitatif en relation avec les figures jointes parmi lesquelles :
- la figure 1 est une vue schématique d'un véhicule selon un mode de réalisation ;
- la figure 2 est une vue en perspective partielle d'une structure de caisse du véhicule selon un mode de réalisation ;
- la figure 3 est une section partielle suivant un plan A vertical et longitudinal ou sensiblement vertical et longitudinal d'un agencement selon un mode de réalisation ;
- la figure 4 est une section partielle suivant un plan B transversal et longitudinal ou sensiblement transversal et longitudinal d'un agencement selon un mode de réalisation ;
- la figure 5 est une vue éclatée en perspective d'un insert selon un mode de réalisation ;
- la figure 6 est une vue en perspective de l'insert selon le mode de réalisation ;
- la figure 7 est une autre vue en perspective de l'insert selon le mode de réalisation ;
- la figure 8 est une autre vue en perspective de l'insert selon le mode de réalisation ;
- la figure 9 est une vue en perspective d'une première partie de l'insert selon un mode de réalisation ;
- la figure 10 est une vue de la première partie de l'insert selon le mode de réalisation ;
- la figure 11 est une autre vue en perspective de la première partie de l'insert selon le mode de réalisation ;
- la figure 12 est une vue selon la direction F de la première partie de l'insert selon le mode de réalisation ;
- la figure 13 est une vue selon la direction G de la première partie de l'insert selon le mode de réalisation.

### Description détaillée

La direction selon laquelle un véhicule automobile se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule automobile se déplace habituellement dans la direction longitudinale et est opposé au sens arrière.

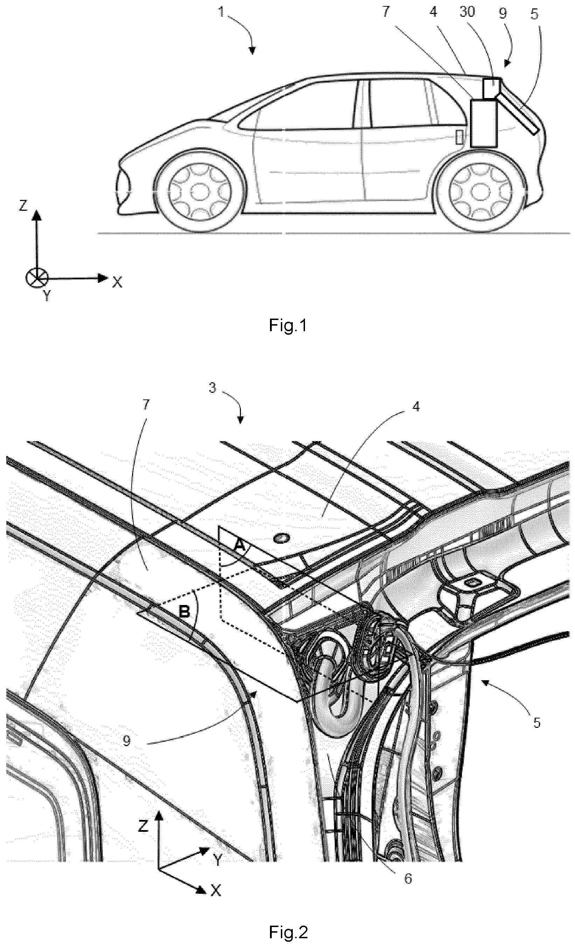

La figure 1 illustre schématiquement un véhicule 1, en particulier un véhicule automobile, selon un mode de réalisation.

Par exemple, le véhicule automobile 1 comprend une porte de coffre de type hayon articulée autour d'un axe horizontal ou sensiblement horizontal. Alternativement, le véhicule comprend une porte de coffre battante, de préférence articulée autour d'un axe vertical ou sensiblement vertical. Par exemple, le véhicule comprend deux portes de coffre battantes, une agencée à droite et une agencée à gauche, de préférence chaque porte étant articulée autour d'un axe vertical ou sensiblement vertical. Par exemple, en cas de deux portes battantes, elles ont sensiblement les mêmes dimensions, notamment selon la direction transversale en position fermée.

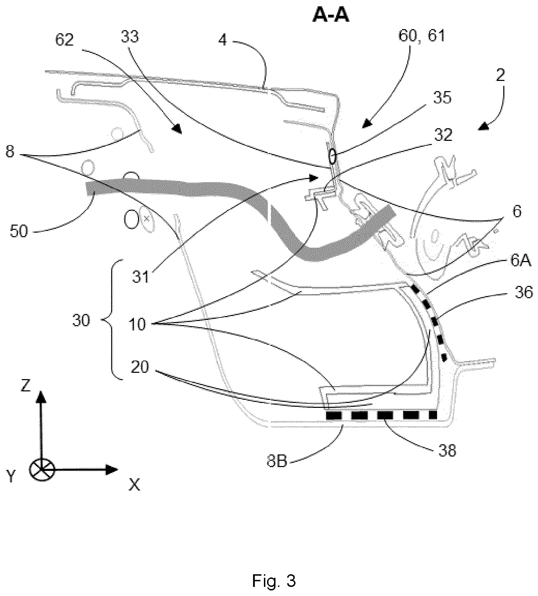

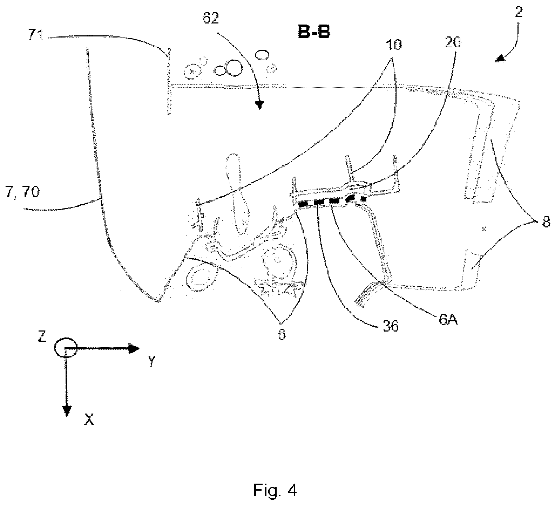

Comme illustré sur la figure 2, le véhicule comprend une structure de caisse 3 selon un mode de réalisation. Le véhicule et/ou la structure de caisse 3 comprend encore un agencement arrière 2 selon un mode de réalisation, illustré en particulier sur les figures 3 et 4. L'agencement arrière 2 comprend un pavillon ou toit 4, un anneau arrière 5 comprenant une gouttière latérale 6 et un côté de caisse 7 comprenant un renfort arrière de custode 8. Le véhicule et/ou la structure de caisse 3 et/ou l'agencement arrière 2 comprend encore au moins un insert antivibratoire 30.

A noter que pour simplifier la description suivante, le côté décrit, comme illustré en particulier sur les figures 1 et 2, est le côté gauche.

En cas de portes battantes symétriques ou sensiblement symétriques par rapport à un plan médian vertical et longitudinal, le côté droit peut être également symétrique par rapport à un plan médian vertical et longitudinal.

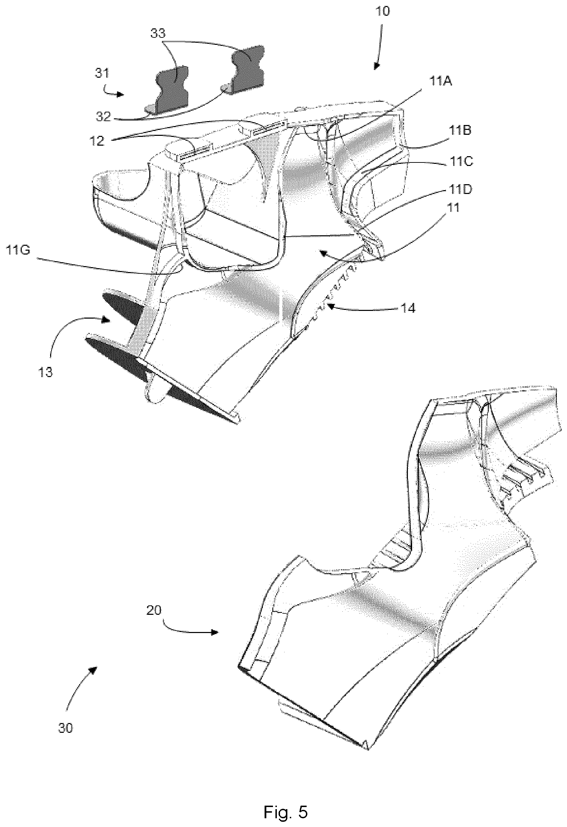

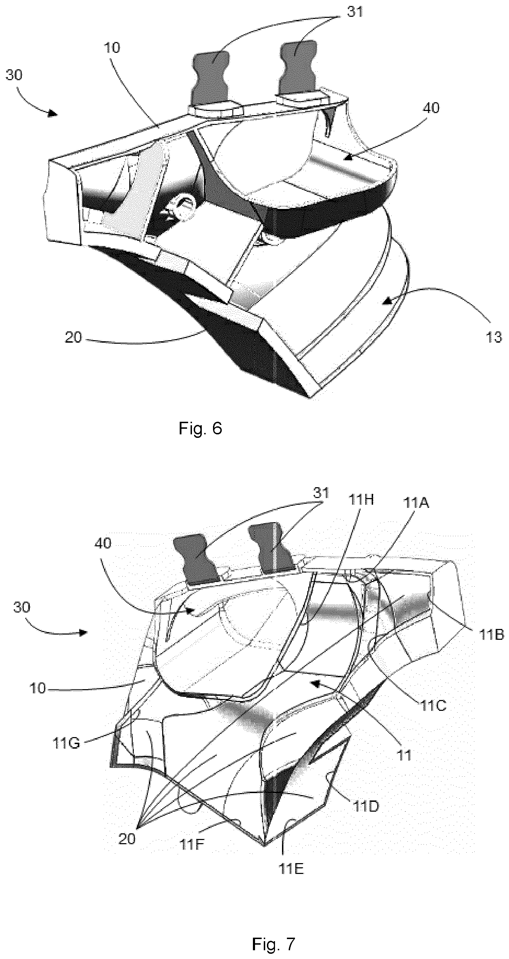

Plus précisément, comme illustré en particulier sur la figure 5, l'insert 30 comprend une première partie 10. La première partie 10 comprend de préférence une cavité principale 11. Par exemple, comme illustré en particulier sur la figure 7, la cavité principale 11 comprend des bords ou rebords 11A, 11B, 11C, 11D, 11E, 11F, 11G et 11H. Avantageusement, la première partie 10 est en matière plastique.

L'insert 30 comprend encore une deuxième partie 20 venant se loger au moins partiellement au sein de la cavité principale 11 de la première partie 10. Alternativement, la deuxième partie 20 se loge intégralement ou sensiblement intégralement au sein de la première partie 10, notamment sans dépasser ou à fleur des rebords 11A, 11B, 11C, 11D, 11E, 11F, 11G et 11H de la cavité principale 11.

Avantageusement, la deuxième partie 20 est en matériau gonflant. Par « matériau gonflant », on entend par exemple qu'il gonfle ou est apte à subir une expansion, en particulier sous l'action d'une variation de température, par exemple une élévation de température à une température seuil et un maintien à cette température seuil pendant une durée prédéfinie.

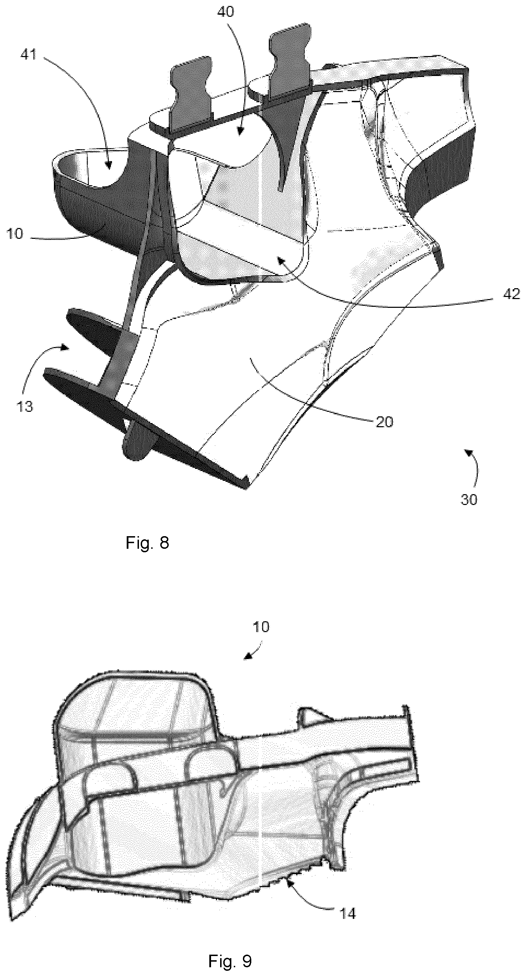

Comme illustré notamment sur la figure 8, l'insert 30 comprend un moyen de guidage 40 pour au moins un conducteur 50. De préférence, le moyen de guidage 40 est de type conduit et comprend au moins un premier orifice 41 et au moins un deuxième orifice 42. Par conducteur 50, illustré sur la figure 3, on entend un ou des fils électriques et/ou un tuyau destiné au transport d'air sous pression ou d'huile sous pression par exemple, de sorte à commander un élément. Cet élément est par exemple une serrure de la ou des portes de coffre ou encore un moyen d'ouverture /fermeture de la ou des portes de coffres.

Avantageusement, comme illustré en particulier sur la figure 5, l'insert 30 comprend un moyen de fixation pour la fixation sur la structure de caisse 3. Ce moyen de fixation comprend de préférence au moins une patte 31, par exemple deux pattes 31. Avantageusement encore, la ou les pattes sont métalliques de sorte à pouvoir être fixées par soudure. Par exemple, comme illustré, chaque patte est une équerre comprenant deux ailes, notamment une aile 32 d'une longueur plus faible que la longueur d'une aile 33. Par exemple, l'aile 32 est destinée à venir coopérer avec un logement ou rainure 12 ménagée dans la première partie 10 de sorte à maintenir et/ou positionner chaque patte par rapport à la première partie 10.

Plus précisément, comme illustré sur les figures 1 à 3, l'insert 30 permet de renforcer la structure 3 de caisse du véhicule 1. Pour ce faire, l'insert 30 est destiné à être positionné au niveau d'une jonction 9 entre le pavillon 4, l'anneau arrière 5 et le côté de caisse 7.

La deuxième partie 20, en se gonflant, vient prendre appui notamment contre les rebords 11A, 11B, 11C, 11D, 11E, 11F, 11G et 11H de la première partie 10. Ainsi, la première partie 10 et, en l'occurrence tout l'insert 30, est rigidifié. En outre, en se gonflant, la deuxième partie 20 appuie contre la gouttière latérale 6. Plus précisément, la deuxième partie 20 appuie contre une première face 6A de la gouttière latérale 6. Alternativement ou en complément, en se gonflant, la deuxième partie 20 appuie contre le renfort arrière de custode 8. Plus précisément, la deuxième partie appuie contre une deuxième face 8B du renfort arrière de custode 8.

Un mode d'exécution d'un procédé de fabrication de l'agencement 2 ou de la structure de caisse 3 ou du véhicule est décrit ci-après.

Dans une étape préalable, on prend une première partie 10 et de préférence deux pattes 31. On fixe les pattes 31 en emmanchant les ailes 32 dans les rainures 12 de la première partie 10, éventuellement après encollage de la rainure et/ou des ailes 32. Les pattes 31 sont alors fixées sur la première partie 10. On positionne ensuite la deuxième partie 20 au sein de la cavité principale 11, par exemple en calant la deuxième partie 20 contre les rebords 11A à 11H. On obtient alors l'insert 30 non gonflé. A noter qu'alternativement, il peut être envisageable de positionner la deuxième partie 20 sur la première partie 10 avant de procéder à la fixation des pattes 31 sur la première partie 10.

On passe ensuite à une étape de fixation de l'insert 30 sur la gouttière latérale 6. De préférence, comme illustré en particulier sur la figure 3, au moins un point de soudure 35 est réalisé entre chaque patte 31, notamment chaque aile 33, et la gouttière latérale 6. On obtient ainsi un pré-assemblage 60 comprenant l'insert 30 non gonflé et la gouttière latérale 6.

On fixe ensuite le pré-assemblage 60 avec une peau 70 de côté de caisse 7. A noter que le côté de caisse peut comprendre une doublure 71 de côté de caisse illustrée sur la figure 4. De préférence, comme illustré sur les figures 5, 6 et 8, des encoches ou une gorge 13 est ménagée sur la première partie 10. Cette gorge 13 permet de fixer le pré-assemblage 60, par exemple par emboîtement de l'insert 30 dans la peau 70 de côté de caisse 7. On obtient alors un assemblage 61 de côté de caisse.

On lie ensuite l'assemblage 61 de côté de caisse au renfort arrière de custode 8. Pour réaliser cette liaison, on assure un appui de la deuxième partie 20 contre la gouttière latérale 6, de préférence par un appui contre la première face 6A de la gouttière latérale 6. Par exemple la première face 6A s'étend verticalement ou sensiblement verticalement et éventuellement transversalement ou sensiblement transversalement. Alternativement ou en complément, de préférence simultanément ou sensiblement simultanément, on assure un appui de la deuxième partie 20 contre le renfort arrière de custode 8, de préférence par un appui contre la deuxième face 8B du renfort arrière de custode 8. Par exemple, la deuxième face 8B s'étend horizontalement, par exemple en étant parallèle ou sensiblement parallèle à un plan transversal et longitudinal. Ce ou ces appuis sont obtenus par passage dans un four ou étuve peinture déclenchant l'expansion ou gonflage de la deuxième partie 20. En effet, en augmentant la température de la deuxième partie 20, celle-ci gonfle ce qui génère des appuis de la deuxième partie 20 contre la première partie 10, en particulier au sein de la cavité principale 11 et de ses rebords. En outre, des contacts 36 au niveau de la première face 6A (expansion illustrée par des pointillés sur les figures 3 et 4) de la gouttière latérale 6 et/ou des contacts 38 au niveau de la deuxième face 8B du renfort arrière de custode 8 (expansion illustrée par des pointillés sur la figure 4) sont également générés par cette augmentation de volume. Ainsi, l'augmentation de volume de la deuxième partie 20 vient pré-contraindre l'insert 30 au niveau de ses faces qui coopèrent au niveau de la jonction 9, en particulier entre la première face 6A et la deuxième face 8B.

Avantageusement, on fixe ensuite le pavillon 4. La fixation du pavillon permet de préférence d'obturer ou fermer un corps creux 62 délimité notamment par le renfort arrière de custode 8, la gouttière latérale 6 et le côté de caisse 7 (illustré figures 3 et 4).

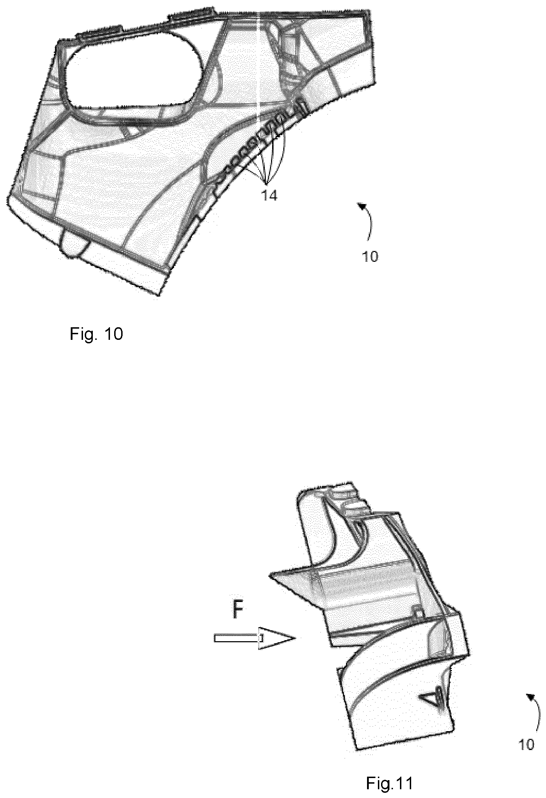

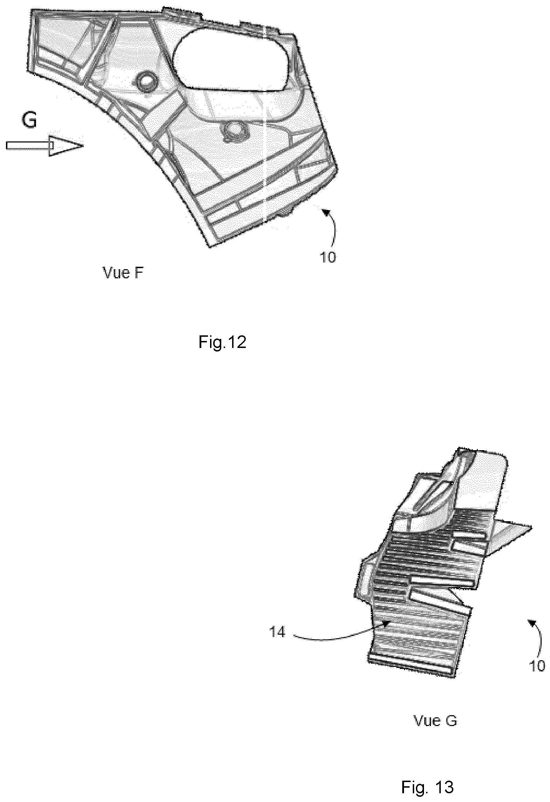

En résumé, l'insert doté de sa partie gonflante permet d'atteindre par exemple au moins 40Hz de fréquence pour la torsion de la structure de caisse tout en préservant un passage pour au moins un conducteur, par exemple du câblage, via le moyen de guidage 40. Cette fréquence, en plus de garantir l'endurance du véhicule par rapport aux sollicitations que le véhicule subit durant sa durée de vie (vibrations dues au moteur, roulage, etc...), permet également de bons résultats en acoustique vibratoire. Comme évoqué, la liaison entre la face première face 6A verticale de la gouttière latérale 6 avec la deuxième face 8B horizontale du renfort arrière de custode 8 est assurée lors du passage étuve peinture de la structure de caisse ce qui déclenche l'expansion du matériau gonflant. En plus de la liaison créée entre la première partie 10 et ces deux faces par l'expansion de la deuxième partie 20, la forme en équerre de l'insert 30, notamment la première partie 10 illustrée plus précisément aux figures 9 à13, renforce le nœud 9 au niveau du coin supérieure arrière gauche de l'anneau 5 de la structure de caisse 3. Autrement dit, le support en plastique 10 permet d'une part de recevoir ou supporter le matériau gonflant 20 et d'autre part de participer à la raideur de la structure après expansion du matériau gonflant. Le matériau gonflant permet de lier toutes les faces se retrouvant en vis-à-vis ou sensiblement en vis-à-vis de lui une fois expansé. De préférence, au moins une nervure 14, voire un réseau de nervures, ménagé dans la première partie 10 apporte de la raideur à la première partie, et par conséquent à l'insert, et une fois le matériau gonflant expansé, au nœud ou jonction 9.

A noter que la forme spécifique (conduit 40, orifices 41, 42) de l'insert permet le passage et le guidage du câblage à travers celui-ci tout en autorisant le passage au travers ou au sein du corps creux 62.

En outre, l'insert assure une fonction de guidage pour le conducteur 50, le moyen de guidage pouvant être courbé de sorte à orienter le conducteur 50. En effet, le moyen 40 n'est pas un simple trou de passage, sa forme lui permettant de guider le câblage afin de l'orienter dans la bonne direction lors de l'enfilage. De préférence, l'insert 30 n'occupe pas l'intégralité du volume disponible au sein du corps creux 62, notamment pour faciliter l'implantation du conducteur 50. A noter que le conducteur 50 de type fils d'alimentation électrique de préférence passe par exemple à l'intérieur de l'anneau arrière 5, par exemple pour alimenter une ou de portes battantes ou un hayon, et/ou au moins une serrure, et/ou au moins un feu stop et/ou au moins un essuie-vitre arrière et/ou au moins une lumière de plaque d'immatriculation, et traverse l'insert depuis l'intérieur du véhicule vers l'extérieur. La qualité perçue pour l'utilisateur s'en trouve améliorée lorsque la ou les portes sont ouvertes, le câblage étant invisible. Par exemple, un trou de passage câblage est prédisposé dans le moule de la première partie 10 en plastique de sorte à permettre ensuite le passage du câblage en usine après expansion du produit gonflant de la deuxième partie 20.

Seules les pattes 31 sont soudées ce qui facilite le montage, le passage d'une pince à souder étant généralement délicat voire impossible au niveau de cette jonction 9 de la structure de caisse 3.

Grâce à la deuxième partie 20 venant se gonfler contre la structure de caisse et également contre les recoins ou rebords de la première partie 10, l'insert 30 a une section « fermée » et est particulièrement rigide. Autrement dit, la section de l'anneau arrière est rigidifiée par expansion de l'insert qui vient alors équerrer le corps creux 62. La présence du conduit du moyen de guidage 40 n'altère pas cette rigidité une fois l'insert en place et la deuxième partie gonflée. Ainsi, le coin ou jonction 9 supérieure de l'anneau arrière 5, soumise aux déformations en cours d'utilisation du véhicule, est rigidifiée tout en laissant un passage d'alimentation des éléments électriques. Il en résulte des déformations moindres de l'anneau arrière.

En remarque, la solution selon l'invention atteint donc l'objectif recherché d'améliorer la résistance en torsion d'une structure de caisse au niveau d'un nœud supérieur arrière droit ou gauche, tout en laissant un passage pour un câblage d'alimentation et présente les avantages suivants :
- elle est économique puisque la fonction guidage de câblage est assurée par l'insert antivibratoire ce qui permet de supprimer une pièce dédiée à cette fonction ;
- elle peut être utilisée au niveau de tout anneau arrière agencé sur une structure de caisse de véhicule dotée de porte de coffre de type hayon ou porte(s) battante(s).

## Revendications

1. Agencement arrière (2) comprenant un pavillon (4), un anneau arrière (5) comprenant une gouttière latérale (6) et un côté de caisse (7) comprenant un renfort arrière de custode (8), **caractérisé en ce qu'**il comprend un insert (30) antivibratoire pour une structure (3) de caisse de véhicule, notamment de véhicule automobile (1), destiné à être positionné au niveau d'une jonction (9) entre un pavillon (4), un anneau arrière (5) comprenant une gouttière latérale (6) et un côté de caisse (7) comprenant un renfort arrière de custode (8), l'insert (30) comprenant :
- une première partie (10) comprenant une cavité principale (11), notamment une première partie (10) en matière plastique,
- une deuxième partie (20) venant se loger au moins partiellement au sein de la cavité principale (11) de la première partie (10), la deuxième partie (20) de l'insert (30) est de forme en équerre et comprend un matériau gonflant sous l'action d'une élévation de température de sorte à rigidifier l'insert (30) et la jonction (9), notamment à rigidifier la première partie (10), en appuyant contre la gouttière latérale (6), notamment contre une première face (6A) de la gouttière latérale (6), et en appuyant contre le renfort arrière de custode (8), notamment contre une deuxième face (8B) du renfort arrière de custode (8),
- un moyen de guidage (40) pour au moins un conducteur (50), notamment un moyen de guidage (40) de type conduit comprenant au moins un premier orifice (41) et au moins un deuxième orifice (42).

2. Agencement arrière (2) selon l'une des revendications précédentes, **caractérisé en ce que** l'insert (30) comprend un moyen de fixation pour la fixation sur une telle structure de caisse (3), notamment un moyen de fixation comprenant au moins une patte (31), notamment une patte (31) métallique.

3. Agencement arrière (2) selon l'une des revendications précédentes, **caractérisé en ce que** la cavité principale (11) de l'insert (30) comprend un contour comprenant au moins un rebord (11A, 11B, 11C, 11D, 11E, 11F, 11G, 11H) destiné à venir au contact de la deuxième partie (20).

4. Agencement arrière (2) selon l'une des revendications précédentes, **caractérisé en ce que** la première partie (10) de l'insert (30) comprend au moins une nervure de rigidification (14).

5. Structure de caisse (3) de véhicule, notamment de véhicule automobile (1), **caractérisée en ce qu'**elle comprend un agencement (2) selon l'une des revendications 1 à 4.

6. Véhicule, notamment véhicule automobile (1), **caractérisé en ce qu'**il comprend un agencement (2) selon l'une des revendications 1 à 4 et/ou une structure de caisse (3) selon la revendication précédente.

7. Procédé de fabrication d'un agencement (2) selon l'une des revendications 1 à 4 ou d'une structure de caisse (3) selon la revendication 5 ou d'un véhicule selon la revendication 6 comprenant les étapes suivantes :
- une étape de fixation de l'insert (30) sur une gouttière latérale (6), par soudage d'au moins une patte (31) sur la gouttière latérale (6), de sorte à obtenir un pré-assemblage (60), puis
- une étape de fixation du pré-assemblage (60) avec au moins une peau (70) de côté de caisse (7) de sorte à obtenir un assemblage (61) de côté de caisse, notamment en emboîtant l'insert (30) dans l'au moins une peau (70) de côté de caisse, puis
- une étape de liaison de l'assemblage (61) de côté de caisse sur un renfort arrière de custode (8), notamment par un appui de la deuxième partie (20) contre la gouttière latérale (6), notamment par un appui contre la première face (6A) de la gouttière latérale (6) et/ou par un appui de la deuxième partie (20) contre le renfort arrière de custode (8), notamment par un appui contre la deuxième face (8B) du renfort arrière de custode (8) par un chauffage déclenchant l'expansion ou gonflage de la deuxième partie (20), notamment en passant dans une étuve de peinture, de sorte à pré-contraindre le volume occupé par l'insert (30) au niveau de la jonction (9), puis
- une étape de fixation d'un pavillon (4) de sorte à fermer un corps creux (62) s'étendant notamment entre la gouttière latérale (6), le côté de caisse (7) et le renfort arrière de custode (8).

## Patentansprüche

1. Heckanordnung (2), umfassend ein Dach (4), einen hinteren Ring (5), der eine seitliche Rinne (6) umfasst, und eine Karosserieseitenteil (7), das eine hintere C-Säulen-Verstärkung (8) umfasst, **dadurch gekennzeichnet, dass** sie einen schwingungsdämpfenden Einsatz (30) für eine Karosseriestruktur (3) eines Fahrzeugs, insbesondere eines Kraftfahrzeugs (1), umfasst, der dazu bestimmt ist, an einem Übergang (9) zwischen einem Dach (4), einem hinteren Ring (5), der eine seitliche Rinne (6) umfasst, und einem Karosserieseitenteil (7), das eine hintere C-Säulen-Verstärkung (8) umfasst, positioniert zu werden, wobei der Einsatz (30) umfasst:
- einen ersten Teil (10), der einen Haupthohlraum (11) umfasst, insbesondere einen ersten Teil (10) aus Kunststoff,
- einen zweiten Teil (20), der mindestens teilweise in dem Haupthohlraum (11) des ersten Teils (10) untergebracht ist, wobei der zweite Teil (20) des Einsatzes (30) winkelförmig ist und ein Material umfasst, das unter der Einwirkung einer Temperaturerhöhung aufquillt, so dass der Einsatz (30) und der Übergang (9) versteift werden, insbesondere der erste Teil (10) versteift wird, wobei er gegen die seitliche Rinne (6) drückt, insbesondere gegen eine erste Seite (6A) der seitlichen Rinne (6), und wobei er gegen die hintere C-Säulen-Verstärkung (8) drückt, insbesondere gegen eine zweite Seite (8B) der hinteren C-Säulen-Verstärkung (8),
- ein Führungsmittel (40) für mindestens einen Leiter (50), insbesondere ein Führungsmittel (40) vom Typ Rohr, das mindestens eine erste Öffnung (41) und mindestens eine zweite Öffnung (42) umfasst.

2. Heckanordnung (2) nach einem der vorhergehenden Ansprüche, **dadurch gekennzeichnet, dass** der Einsatz (30) ein Befestigungsmittel zur Befestigung an einer solchen Karosseriestruktur (3) umfasst, insbesondere ein Befestigungsmittel, das mindestens eine Lasche (31), insbesondere eine metallische Lasche (31), umfasst.

3. Heckanordnung (2) nach einem der vorhergehenden Ansprüche, **dadurch gekennzeichnet, dass** der Haupthohlraum (11) des Einsatzes (30) eine Kontur umfasst, die mindestens eine Kante (11A, 11B, 11C, 11D, 11E, 11F, 11G, 11H) umfasst, die dazu bestimmt ist, mit dem zweiten Teil (20) in Kontakt zu gelangen.

4. Heckanordnung (2) nach einem der vorhergehenden Ansprüche, **dadurch gekennzeichnet, dass** der erste Teil (10) des Einsatzes (30) mindestens eine Versteifungsrippe (14) umfasst.

5. Karosseriestruktur (3) eines Fahrzeugs, insbesondere eines Kraftfahrzeugs (1), **dadurch gekennzeichnet, dass** sie eine Anordnung (2) nach einem der Ansprüche 1 bis 4 umfasst.

6. Fahrzeug, insbesondere Kraftfahrzeug (1), **dadurch gekennzeichnet, dass** es eine Anordnung (2) nach einem der Ansprüche 1 bis 4 und/oder eine Karosseriestruktur (3) nach dem vorhergehenden Anspruch umfasst.

7. Verfahren zur Herstellung einer Anordnung (2) nach einem der Ansprüche 1 bis 4 oder einer Karosseriestruktur (3) nach Anspruch 5 oder eines Fahrzeugs nach Anspruch 6, umfassend die folgenden Schritte:
- einen Schritt des Befestigens des Einsatzes (30) an einer seitlichen Rinne (6) durch Schweißen mindestens einer Lasche (31) an die seitliche Rinne (6), so dass eine Vor-Baugruppe (60) erhalten wird, dann
- einen Schritt des Befestigens der Vor-Baugruppe (60) mit mindestens einer Haut (70) eines Karosserieseitenteils (7), so dass eine Baugruppe (61) eines Karosserieseitenteils erhalten wird, insbesondere, indem der Einsatz (30) in die mindestens eine Haut (70) eines Karosserieseitenteils gesteckt wird, dann
- einen Schritt des Verbindens der Baugruppe (61) des Karosserieseitenteils mit einer hinteren C-Säulen-Verstärkung (8), insbesondere durch ein Drücken des zweiten Teils (20) gegen die seitliche Rinne (6), insbesondere durch ein Drücken gegen die erste Seite (6A) der seitlichen Rinne (6), und/oder durch ein Drücken des zweiten Teils (20) gegen die hintere C-Säulen-Verstärkung (8), insbesondere durch ein Drücken gegen die zweite Seite (8B) der hinteren C-Säulen-Verstärkung (8), durch eine Erwärmung, die das Ausdehnen oder Aufquellen des zweiten Teils (20) auslöst, insbesondere durch Einführen in eine Lackierungstrockenkammer, so dass das Volumen, das von dem Einsatz (30) an dem Übergang (9) eingenommen wird, vorgespannt wird, dann
- einen Schritt des Befestigens eines Dachs (4), so dass ein hohler Körper (62) geschlossen wird, der sich insbesondere zwischen der seitlichen Rinne (6), dem Karosserieseitenteil (7) und der hinteren C-Säulen-Verstärkung (8) erstreckt.

## Claims

1. Rear arrangement (2) comprising a roof (4), a rear ring (5) comprising a side channel (6) and a body side (7) comprising a rear quarter panel reinforcement (8), **characterized in that** it comprises a vibration-damping insert (30) for a vehicle body structure (3), notably for a motor vehicle (1), intended to be positioned at a junction (9) between a roof (4), a rear ring (5) comprising a side channel (6) and a body side (7) comprising a rear quarter panel reinforcement (8), the insert (30) comprising:
- a first portion (10) comprising a main cavity (11), notably a first portion (10) made of plastic,
- a second portion (20) which is housed at least partially within the main cavity (11) of the first portion (10), the second portion (20) of the insert (30) is square-shaped and comprises a material which swells in response to an increase in temperature so as to stiffen the insert (30) and the junction (9), notably to stiffen the first portion (10), by pressing against the side channel (6), notably against a first face (6A) of the side channel (6), and by pressing against the rear quarter panel reinforcement (8), notably against a second face (8B) of the rear quarter panel reinforcement (8),
- a guide means (40) for at least one conductor (50), notably a duct-like guide means (40) comprising at least one first opening (41) and at least one second opening (42).

2. Rear arrangement (2) according to one of the preceding claims, **characterized in that** the insert (30) comprises a fastening means for fastening to such a body structure (3), notably a fastening means comprising at least one tab (31), notably a metal tab (31).

3. Rear arrangement (2) according to one of the preceding claims, **characterized in that** the main cavity (11) of the insert (30) comprises a contour comprising at least one edge (11A, 11B, 11C, 11D, 11E, 11F, 11G, 11H) intended to come into contact with the second portion (20).

4. Rear arrangement (2) according to one of the preceding claims, **characterized in that** the first portion (10) of the insert (30) comprises at least one stiffening rib (14).

5. Vehicle body structure (3), notably of a motor vehicle (1), **characterized in that** it comprises an arrangement (2) according to one of Claims 1 to 4.

6. Vehicle, notably a motor vehicle (1), **characterized in that** it comprises an arrangement (2) according to one of Claims 1 to 4 and/or a body structure (3) according to the preceding claim.

7. Method of manufacturing an arrangement (2) according to one of Claims 1 to 4 or a body structure (3) according to Claim 5 or a vehicle according to Claim 6 comprising the following steps:
- a step of fastening the insert (30) to a side channel (6), by welding at least one tab (31) to the side channel (6), so as to obtain a pre-assembly (60), then
- a step of fastening the pre-assembly (60) with at least one skin (70) of the body side (7) so as to obtain a body-side assembly (61), notably by fitting the insert (30) into the at least one body-side skin (70), then
- a step of connecting the body-side assembly (61) to a rear quarter panel reinforcement (8), notably by pressing the second portion (20) against the side channel (6), notably by pressing against the first face (6A) of the side channel (6) and/or by pressing the second portion (20) against the rear quarter panel reinforcement (8), notably by pressing against the second face (8B) of the rear quarter panel reinforcement (8) by heating to trigger the expansion or swelling of the second portion (20), notably by passing through a paint curing oven, so as to pre-stress the volume occupied by the insert (30) at the junction (9), then
- a step of fastening a roof (4) so as to close a hollow body (62) extending notably between the side channel (6), the body side (7) and the rear quarter panel reinforcement (8).
